# EUROPEAN PATENT SPECIFICATION

(11) **EP 3 546 517 B1**
(45) Date of publication and mention of the grant of the patent: **08.03.2023**
(21) Application number: 17874939.6
(22) Date of filing: 21.11.2017
(51) Int. Cl.: C08L 27/18, C08K 5/06, C08K 5/095, C08K 5/098, C08L 71/00, C08L 83/12

(54) **AQUEOUS POLYTETRAFLUOROETHYLENE DISPERSION**
WÄSSRIGE POLYTETRAFLUORETHYLENDISPERSION
DISPERSION AQUEUSE DE POLYTÉTRAFLUOROÉTHYLÈNE

(30) Priority: 28.11.2016 JP 2016229920
(43) Date of publication of application: 02.10.2019
(73) Proprietor: AGC INC., Chiyoda-ku, Tokyo 1008405 (JP); AGC Chemicals Europe, Limited, Thornton-Cleveleys, Lancashire FY5 4QD (GB)
(72) Inventor: KOBAYASHI Shigeki, Tokyo 100-8405 (JP); TAKAZAWA Masahiro, Tokyo 100-8405 (JP); MORGOVAN-ENE, Ariana Claudia, Thornton-Cleveleys Lancashire FY5 4QD (GB); WADE, Anthony Eugene, Thornton-Cleveleys Lancashire FY5 4QD (GB); CAINE, Diane, Thornton-Cleveleys Lancashire FY5 4QD (GB)
(74) Representative: Müller-Boré & Partner Patentanwälte PartG mbB
(86) International application number: PCT/JP2017/041866
(87) International publication number: WO 2018/097141

(56) References cited:
- EP-A1- 2 902 424
- EP-A1- 3 385 326
- WO-A1-2006/078014
- WO-A1-2017/094798
- JP-A- H1 161 028
- JP-A- H04 300 937
- JP-A- 2000 515 428
- JP-A- 2001 288 320
- JP-A- 2006 083 274
- JP-A- 2006 516 673
- JP-A- 2006 519 290
- JP-A- 2007 308 529
- JP-A- 2007 501 332
- JP-A- 2009 161 616

## Description

The present invention relates to a polytetrafluoroethylene (hereinafter referred to also as PTFE) aqueous dispersion.

Usually PTFE is prepared by an emulsion polymerization method of polymerizing tetrafluoroethylene (hereinafter referred to also as TFE) using an emulsifier in an aqueous medium. According to such an emulsion polymerization method, an aqueous emulsion having PTFE particles dispersed in an aqueous medium will be obtained. Such an aqueous emulsion is unstable with a low viscosity and is likely to form coagulum.

Patent Document 1 discloses a method wherein to such an aqueous emulsion, a nonionic surfactant is added as a dispersing agent for stabilization, optionally followed by concentration, to obtain a PTFE aqueous dispersion with good mechanical stability.

Such a PTFE aqueous dispersion may, for example, be used in a method wherein it is impregnated, coated or screen-printed to a substrate, in the form of an aqueous dispersion. Further, it may be used in the form of a paint having a high viscosity by adding a thickening agent or a surface modifier, to form a relatively thick coating layer.

Patent Document 2 discloses a polytetrafluoroethylene aqueous dispersion which is excellent in mechanical stability, while being not susceptible to foaming.

Patent Document 3 discloses an aqueous polytetrafluoroethylene dispersion composition, a polytetrafluoroethylene resin film, and a polytetrafluoroethylene resin-impregnated object.

Patent Document 4 discloses tetrafluoroethene polymer dispersions stabilized with aliphatic non-ionic surfactants.
Patent Document 1: WO2007/046482
Patent Document 2: EP 3 385 326 A1
Patent Document 3: WO 2006/078014 A1
Patent Document 4: EP 2 902 424 A1

According to the findings of the present inventors, the PTFE aqueous dispersion obtainable by the method disclosed in Patent Document 1 has good mechanical stability even though its viscosity is low, but it may sometimes have a problem of foaming by a shear force such as stirring, and thus, further improvement is desired.

It is an object of the present invention to provide a PTFE aqueous dispersion which is excellent in mechanical stability, while being less likely to foam.

The present invention provides a PTFE aqueous dispersion having the following constructions.
[1] A polytetrafluoroethylene aqueous dispersion characterized by comprising
   from 15 to 70 mass% of polytetrafluoroethylene particles having an average primary particle size of from 0.1 to 0.5 µm as measured by using a laser scattering method particle size distribution analyzer,
   from 0.1 to 20,000 ppm, to the mass of the above polytetrafluoroethylene particles, of at least one fluorinated emulsifier selected from the group consisting of a C₄₋₇ fluorinated carboxylic acid which may have an etheric oxygen atom, and salts thereof,
   from 1 to 20 parts by mass, per 100 parts by mass of the above polytetrafluoroethylene particles, of a nonionic surfactant represented by the following formula (I),
   from 0.15 to 3 parts by mass, per 100 parts by mass of the above polytetrafluoroethylene particles, of a polyether polysiloxane copolymer, and
   water,

      R¹-O-A-H (I)

      wherein R¹ is a C₈₋₁₈ alkyl group, and A is a polyoxyalkylene chain composed of an average repeating number of from 5 to 20 oxyethylene groups and an average repeating number of from 0 to 2 oxypropylene groups,
   wherein the polyether polysiloxane copolymer is a block copolymer in which a linear polysiloxane chain and a linear polyether chain are alternately bonded, and
   in which the terminal silicon atom of the linear polysiloxane chain and the terminal oxygen atom of the linear polyether chain are bonded.
[2] The aqueous dispersion according to [1], wherein the polytetrafluoroethylene particles are particles of non-melt-moldable modified PTFE.
[3] The aqueous dispersion according to [1] or [2], wherein the standard specific gravity of the polytetrafluoroethylene particles is at least 2.14 and less than 2.22 as measured in accordance with ASTM D1457-91a, D4895-91a.
[4] The aqueous dispersion according to any one of [1] to [3], wherein the fluorinated emulsifier is an ammonium salt of the fluorinated carboxylic acid having an etheric oxygen atom.
[5] The aqueous dispersion according to any one of [1] to [4], wherein A in the nonionic surfactant represented by the formula (I) is a polyoxyalkylene chain composed of an average repeating number of from 7 to 12 oxyethylene groups and an average repeating number of from 0.5 to 1.5 oxypropylene groups.
[6] The aqueous dispersion according to any one of [1] to [5], wherein the polyether chain of the polyether polysiloxane copolymer is composed of the oxyethylene group and the oxypropylene group.
[7] The aqueous dispersion according to any one of [1] to [6], wherein in the polyether polysiloxane copolymer, the proportion of the polysiloxane chain to the total of the polyether chain and the polysiloxane chain is from 30 to 65 mass%.
[8] The aqueous dispersion according to any one of [1] to [7], wherein in the polyether polysiloxane copolymer, the proportion of the oxyethylene group to the total of the oxyalkylene group constituting the polyether chain is from 33 to 66 mol%.

The PTFE aqueous dispersion of the present invention is excellent in mechanical stability and at the same time has such a characteristic that it is less likely to foam.

In the present invention, "less likely to foam" means not foaming, or even if foamed, foams will promptly disappear. Hereinafter, it may be referred to also as a low-foaming characteristic.

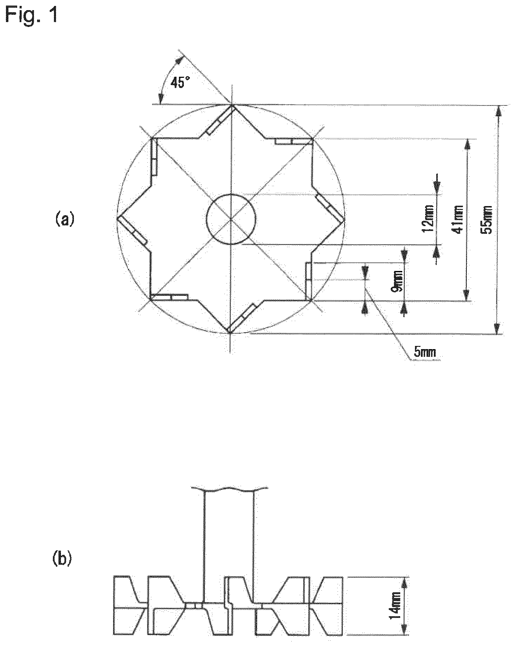

Fig. 1 shows a stirring blade used for evaluation of the mechanical stability characteristic, wherein (a) is a plan view as viewed from above, and (b) is a side view.

The following terms have the following meanings.

The "average primary particle size" of PTFE particles means the median diameter on a volume basis obtained by measuring particle sizes of PTFE particles in the PTFE aqueous dispersion by a laser scattering method particle size distribution analyzer.

The "standard specific gravity (hereinafter referred to also as SSG)" of PTFE particles is an index for the molecular weight, and the larger the value, the smaller the molecular weight. The measurement is carried out in accordance with ASTM D1457-91a, D4895-91a.

The "ppm" as a unit for the content is by mass.

### <PTFE particles>

In the present invention, the PTFE particles are particles of a non-melt-moldable polymer, and include both TFE homopolymer particles and modified PTFE particles. As the PTFE particles, particles of non-melt-moldable modified PTFE are preferred.

The "non-melt-moldability" means being not melt-moldable, i.e. showing no melt flowability. Specifically, it means that the melt flow rate measured in accordance with ASTM D3307 at a measuring temperature of 372°C under a load of 49 N is less than 0.5 g/10 min.

The modified PTFE is a TFE polymer having comonomers copolymerized to TFE to such an extent that does not cause melt-moldability.

The comonomers to be used for the production of modified PTFE may, for example, be hexafluoropropylene, a perfluoro(alkyl vinyl ether), chlorotrifluoroethylene, a (perfluoroalkyl) ethylene, vinylidene fluoride, a perfluoro(alkenyl vinyl ether), perfluoro(2,2-dimethyl-1 ,3-dioxole), a perfluoro(4-alkyl-1 ,3-dioxole), etc. One of these comonomers may be used alone, or two or more of them may be used in combination.

The content of comonomer units in the modified PTFE is preferably at most 0.5 mass%, more preferably at most 0.4 mass%, to all monomer units.

In the production of the modified PTFE, the total amount of TFE and comonomers to be consumed in the copolymerization reaction of TFE and comonomers is approximately equal to the amount of the modified PTFE to be produced.

The average primary particle size of the PTFE particles is from 0.1 to 0.5 µm, preferably from 0.18 to 0.45 µm, particularly preferably from 0.20 to 0.35 µm. If the average primary particle size is smaller than 0.1 µm, cracking is likely to occur in the coating layer obtained from the PTFE aqueous dispersion, and if it is larger than 0.5 µm, sedimentation of the PTFE particles in the PTFE aqueous dispersion tends to be too fast, such being undesirable from the viewpoint of storage stability.

The standard specific gravity (SSG) of the PTFE particles is preferably at least 2.14 and less than 2.22, more preferably from 2.15 to 2.21. When SSG is within the above range, good mechanical properties of PTFE in the final product can be easily obtained.

The content of the PTFE particles in the PTFE aqueous dispersion is from 15 to 70 mass%, preferably from 18 to 70 mass%, more preferably from 20 to 70 mass%.

If the content of the PTFE particles is less than 15 mass%, the viscosity of the PTFE aqueous dispersion tends to be too low, whereby the PTFE particles are likely to sediment and the storage stability tends to be low. On the other hand, if the content of the PTFE particles is larger than 70 mass%, the fluidity of the PTFE aqueous dispersion tends to be poor, and the handling efficiency in the next step tends to be poor. For example, in a case where the next step is an impregnation step, penetration tends to be insufficient, and in the case of a mixing step, dispersibility tends to be low.

### <Fluorinated emulsifier>

The PTFE aqueous dispersion contains at least one fluorinated emulsifier selected from the group consisting of a C₄₋₇ fluorinated carboxylic acid which may have an etheric oxygen atom, and salts thereof. Here, the number of carbon atoms means the number of all carbon atoms per molecule.

Part or all of the fluorinated emulsifier is an emulsifier used in the step of producing PTFE by an emulsion polymerization method.

The fluorinated emulsifier is preferably at least one fluorinated emulsifier selected from the group consisting of a C₄₋₇ fluorinated carboxylic acid having an etheric oxygen atom and salts thereof.

The fluorinated carboxylic acid having an etheric oxygen atom is a C₄₋₇ compound having an etheric oxygen atom midway in the carbon chain of the main chain and having -COOH at its terminal. The terminal -COOH may form a salt. The number of etheric oxygen atoms present midway in the main chain is at least 1, preferably from 1 to 4, more preferably 1 or 2. The number of carbon atoms is preferably from 5 to 7.

Specific preferred examples of the fluorinated carboxylic acid which may have an etheric oxygen atom, and salts thereof may be C₂F₅OCF₂CF₂OCF₂COOH, C₃F₇OCF₂CF₂OCF₂COOH, CF₃OCF₂OCF₂OCF₂OCF₂COOH, CF₃O(CF₂CF₂O)₂CF₂COOH, CF₃CF₂O(CF₂)₄COOH, CF₃CFHO(CF₂)₄COOH, CF₃OCF(CF₃)CF₂OCF(CF₃)COOH, CF₃O(CF₂)₃OCF(CF₃)COOH, CF₃O(CF₂)₃OCHFCF₂COOH, C₄F₉OCF(CF₃)COOH, C₄F₉OCF₂CF₂COOH, CF₃O(CF₂)₃OCF₂COOH, CF₃O(CF₂)₃OCHFCOOH, CF₃OCF₂ OCF₂OCF₂COOH, C₄F₉OCF₂COOH, C₃F₇OCF₂CF₂COOH, C₃F₇OCHFCF₂COOH, C₃F₇OCF(CF₃)COOH, CF₃CFHO(CF₂)₃COOH, CF₃OCF₂CF₂OCF₂COOH, C₂F₅OCF₂CF₂COOH, C₃F₇OCHFCOOH, CF₃OCF₂CF₂COOH, CF₃(CF₂)₄COOH, and salts thereof such as Li salts, Na salts, K salts, and NH₄ salts.

More preferred examples may be C₂F₅OCF₂CF₂OCF₂COOH, CF₃O(CF₂)₃OCF₂COOH, CF₃OCF(CF₃)CF₂OCF(CF₃)COOH, CF₃O(CF₂)₃OCF₂CF₂COOH, CF₃O(CF₂)₃OCHFCF₂COOH, C₄F₉OCF(CF₃)COOH, C₃F₇OCF(CF₃)COOH, and salts thereof such as Li salts, Na salts, K salts, and NH₄ salts.

An ammonium salt (NH₄ salt) of the above compound is further preferred. In the case of the ammonium salt, it is excellent in solubility in an aqueous medium, and a metal ion component is unlikely to remain as an impurity in PTFE.

C₂F₅OCF₂CF₂OCF₂COONH₄ (hereinafter referred to also as EEA) is particularly preferred.

The content of the fluorinated emulsifier in the PTFE aqueous dispersion is from 0.1 to 20,000 ppm, preferably from 0.1 to 10,000 ppm, more preferably from 0.1 to 1,000 ppm, further preferably from 0.1 to 100 ppm, particularly preferably from 0.1 to 50 ppm, most preferably from 0.1 to 10 ppm, to the mass of the PTFE particles.

When the content of the fluorinated emulsifier is at most the upper limit value in the above range, the fluidity of the PTFE aqueous dispersion is good, and the handling efficiency in the next step will be good. When it is at least the lower limit value in the above range, good dispersibility of the PTFE particles in the PTFE aqueous dispersion is obtainable. From such a viewpoint that foaming is less likely to occur, the content of the fluorinated emulsifier should preferably be small.

### <Nonionic surfactant represented by formula (I)>

The PTFE aqueous dispersion contains a nonionic surfactant represented by the following formula (I) (hereinafter referred to also as a nonionic surfactant (I)). The nonionic surfactant (I) contributes to the dispersion stability of the PTFE aqueous dispersion.

R¹-O-A-H (I)

In the formula (I), R¹ is a C₈₋₁₈ alkyl group. The number of carbon atoms in R¹ is preferably from 10 to 16, more preferably from 12 to 16. When the number of carbon atoms in R¹ is at most 18, good dispersion stability of the PTFE aqueous dispersion tends to be easily obtained. If the number of carbon atoms in R¹ is more than 18, the flow temperature is high, whereby handling tends to be less likely. If the number of carbon atoms in R¹ is smaller than 8, the surface tension of the PTFE aqueous dispersion becomes high, whereby the permeability or wettability tends to decrease.

A is a polyoxyalkylene chain composed of an average repeating number of from 5 to 20 oxyethylene groups and an average repeating number of from 0 to 2 oxypropylene groups, and is a hydrophilic group. When the average repeating number of oxypropylene groups is more than 0, oxyethylene groups and oxypropylene groups in A may be arranged in a block form or in a random form.

From the viewpoint of the viscosity and stability of the PTFE aqueous dispersion, a polyoxyalkylene chain composed of an average repeating number of from 7 to 12 oxyethylene groups and an average repeating number of from 0 to 2 oxypropylene groups is preferred. Particularly, A having from 0.5 to 1.5 oxypropylene groups is preferred, since the low foaming characteristic is thereby good.

Specific examples of the nonionic surfactant (I) may be C₁₃H₂₇-(OC₂H₄)₁₀-OH, C₁₂H₂₅-(OC₂H₄)₁₀-OH, C₁₀H₂₁CH(CH₃)CH₂-(OC₂H₄)₉-OH, C₁₃H₂₇-(OC₂H₄)₉-OCH(CH₃)CH₂-OH, C₁₆H₃₃-(OC₂H₄)₁₀-OH, HC(C₅H₁₁)(C₇H₁₅)-(OC₂H₄)₉-OH, etc.

Commercially available products may, for example, be TERGITOL (registered trademark) 15S series manufactured by Dow Chemical Company, LIONOL (registered trademark) TD series manufactured by Lion Corporation, etc.

The content of the nonionic surfactant (I) in the PTFE aqueous dispersion is from 1 to 20 parts by mass, preferably from 1 to 18 parts by mass, more preferably from 2 to 15 parts by mass, further preferably from 2.5 to 10 parts by mass, particularly preferably from 2.5 to 8 parts by mass, per 100 parts by mass of the PTFE particles.

When the content of the nonionic surfactant (I) is at least the lower limit value in the above range, excellent dispersion stability of the PTFE aqueous dispersion is obtained. Further, good wettability tends to be easily obtained. When it is at most the upper limit value, defects are unlikely to occur in the coating layer obtained from the PTFE aqueous dispersion. Further, in the final product, good durability tends to be easily obtained.

### <Polyether polysiloxane copolymer>

The PTFE aqueous dispersion of the present invention contains a polyether polysiloxane copolymer. The polyether polysiloxane copolymer is a copolymer having a polysiloxane chain and a polyether chain.

The polysiloxane chain in the present invention means an organopolysiloxane chain having an organic group bonded to a silicon atom. This organic group has at the terminal a carbon atom which is bonded to the silicon atom. However, in a case of an organic group having a polyether chain, the terminal atom bonded to the silicon atom may be an oxygen atom.

The polysiloxane chain is a linear polysiloxane chain. Hereinafter, a polyether polysiloxane copolymer having a linear polysiloxane chain will be described.

The linear diorganopolysiloxane is represented by MDₘM (M represents a M unit, D represents a D unit, and m represents an integer of at least 2). The D unit is a unit represented by R₂SiO_{2/2}, the M unit is a unit represented by R₃SiO_{1/2}, and R is a monovalent organic group. As the linear diorganopolysiloxane in the polyether polysiloxane copolymer, it is preferred that two R of the D unit and two R of the M unit are alkyl groups. The alkyl group is preferably an alkyl group having at most 4 carbon atoms, more preferably a methyl group or an ethyl group. The alkyl groups are particularly preferably all methyl groups. The remaining R in the two M units is preferably an organic group having a polyether chain or an oxygen atom at the terminal of the polyether chain.

In addition, a part of the D unit may be a D unit having a polyether chain, and in that case, three R of the M unit may be all alkyl groups. The D unit having a polyether chain may, for example, be a D unit in which one of two R is an organic group having a polyether chain. The organic group having a polyether chain may be an organic group having at the terminal a carbon atom or an oxygen atom which is bonded to a silicon atom.

The polyether chain is preferably a polyoxyalkylene chain composed of a C₂₋₄ oxyalkylene group. Examples of the oxyalkylene group include an oxyethylene group, an oxypropylene group, an oxy-1,2-butylene group, and an oxytetramethylene group. As the oxyalkylene group, an oxyethylene group and an oxypropylene group are particularly preferred. The polyoxyalkylene chain may be a polyoxyalkylene chain composed of at least two oxyalkylene groups. As the polyether chain, a polyoxyalkylene chain composed of an oxyethylene group and an oxypropylene group is preferred.

As the polyether polysiloxane copolymer, a block copolymer is used, which is a block copolymer in which a polysiloxane chain and a polyether chain are alternately bonded. Particularly preferred is a block copolymer in which both terminals of the linear polysiloxane chain and both terminals of the linear polyether chain are bonded directly or via a divalent organic group. Each of the two terminal blocks of these block copolymers is preferably a block having a polyether chain.

The above block copolymer is a type in which the silicon atom of the two M units is linked to an oxygen atom at the terminal of the polyether chain (hereinafter referred to also as "type Ila").

The polyether polysiloxane copolymer of the present invention is thus a block copolymer of the type Ila.

Polyether polysiloxane copolymers which are block copolymers are known. For example, the block copolymer of the type Ila as mentioned above is described in WO2008/064965 and JP-A-01-249109, and the block copolymer of the type IIb as mentioned above is described in WO2016/166979 and JP-A-2013-60594. As the polyether polysiloxane copolymer in the present invention, a commercially available product may be used.

The block copolymer of the type IIa as mentioned above is preferably a block copolymer represented, for example, by the following formula (Ila).

R²¹-(CₐH₂ₐO)_{c}-{(SiR'₂O)ₙ-(CₐH₂ₐO)_{b}}ₑ-(SiR'₂O)ₙ-(CₐH₂ₐO)_{c}-R²² (IIa)

In the formula, R' is a methyl group or an ethyl group, R²¹ and R²² are each independently an alkyl group, an alkenyl group, an aryl group or an aralkyl group, n is from 2 to 30, e is from 1 to 50.

(CₐH₂ₐO)_{b} and (CₐH₂ₐO)_{c} each independently represent a polyether chain composed of a random chain or a block chain of an oxyethylene group and an oxypropylene group, b is from 2 to 50, c is from 2 to 50, a is represented by an average value in each polyether chain and is from 2.1 to 2.9.

It is preferred that R' is a methyl group, and it is preferred that both R²¹ and R²² are alkyl groups or alkenyl groups.

The block copolymer represented by the formula (IIa) can be produced, for example, by subjecting the following formula (lla-1), the following formula (Ila-2) and the following formula (IIa-3) to dehydrochlorination condensation polymerization. R²² is the same group as R²¹.

Cl-(SiR'₂O)ₙ₋₁-SiR'₂-Cl (lla-1)

HO-(CₐH₂ₐO)_{b}-H (lla-2)

R²¹-(CₐH₂ₐO)_{c}-H (Ila-3)

Generally, there are described block copolymers of the type lib, for example, by the following formula (IIb).

R²⁵-O-(CₐH₂ₐO)_{d}-R³-{(SiR'₂O)ₙSiR'₂-R³-O-(CaH₂ₐO)_{d}-R³}_{f}-R²⁵ (IIb)

In the formula, R', a and n are the same as those in the formula (Ila), R²⁵ is an alkyl group, an alkenyl group, an aryl group or an aralkyl group, R³ is an alkylene group, and f is from 1 to 50.

(CₐH₂ₐO)_{d} represents a polyether chain composed of a random chain or a block chain of an oxyethylene group and an oxypropylene group, and d is from 2 to 50.

R²⁵ is a C₂₋₆ alkenyl group having an unsaturated bond at the terminal or a group derived therefrom, preferably an alkenyl group, more preferably an allyl group or a 2-methylallyl group. R³ is an alkylene group formed by adding a hydrogen atom to the unsaturated group of R²⁵ which is an alkenyl group, and is preferably a trimethylene group or a 2-methyltrimethylene group.

The block copolymer represented by the formula (IIb) can be produced by a hydrosilylation reaction of a dihydrogenpolysiloxane represented by the following formula (IIb-1) and a polyoxyalkylene dialkenyl ether represented by the following formula (IIb-2). R² is a C₂₋₆ alkenyl group having an unsaturated bond at the terminal, and is preferably an allyl group or a 2-methylallyl group.

H-(SiR'₂O)ₙSiR'₂-H (Ilb-1)

R²-O-(CₐH₂ₐO)_{b}-R² (IIb-2)

The block copolymer of the type IIc can be produced, for example, by a hydrosilylation reaction of an organohydrogen polysiloxane in which a part of the D unit is SiRHO_{1/2} and a compound having a polyoxyalkylene chain in which one terminal is an alkenyl group.

In the polyether polysiloxane copolymer, the proportion of the polysiloxane chain to the total of the polyether chain and the polysiloxane chain is preferably from 30 to 65 mass%, more preferably from 30 to 55 mass%, particularly preferably from 30 to 50 mass%. If the mass ratio of the polysiloxane chain and the polyether chain falls within this range, the PTFE aqueous dispersion is excellent in low foaming property and is unlikely to cause repelling of the coating film at the time of coating.

In the polyether polysiloxane copolymer, the proportion of the oxyethylene group to the total of the oxyalkylene group constituting the polyether chain is preferably 33 to 66 mol%, more preferably 40 to 60 mol%, particularly preferably 45 to 55 mol%. If the molar ratio of the oxyethylene group in the polyether chain falls within this range, the low foaming property of the PTFE aqueous dispersion tends to be maintained for a long period.

The content of the polyether polysiloxane copolymer in the PTFE aqueous dispersion is from 0.15 to 3 parts by mass, preferably from 0.15 to 2 parts by mass, more preferably from 0.2 to 2 parts by mass, further preferably from 0.2 to 1.5 parts by mass, based on 100 parts by mass of the PTFE particles. If the content of the polyether polysiloxane copolymer is at least the lower limit value of the above range, the PTFE aqueous dispersion becomes less likely to foam. If the content is at most the upper limit value of the above range, no defects are likely to occur in the coating layer obtained from the PTFE aqueous dispersion.

### <Silica>

The PTFE aqueous dispersion may contain silica. The silica is preferably hydrophobic silica. The hydrophobic silica is one obtained by subjecting untreated silica to hydrophobic treatment with a surface treatment agent. The surface treatment agent may be an organofunctional silicone such as trimethylmethoxysilane, trimethylchlorosilane, hexamethyldisiloxane, or hexamethyldisilazane.

When silica is used, the content of silica in the PTFE aqueous dispersion is preferably from 0.05 to 3 parts by mass, more preferably from 0.05 to 2 parts by mass, further preferably from 0.1 to 1 parts by mass, based on 100 parts by mass of the PTFE particles. When the content of silica is within the above range, a favorable antifoaming effect is easily obtained.

### <Compound represented by formula (III)>

It is preferred that the PTFE aqueous dispersion contains a compound represented by the following formula (III) (hereinafter referred to also as a compound (III)). The PTFE aqueous dispersion containing the above compound is less likely to foam.

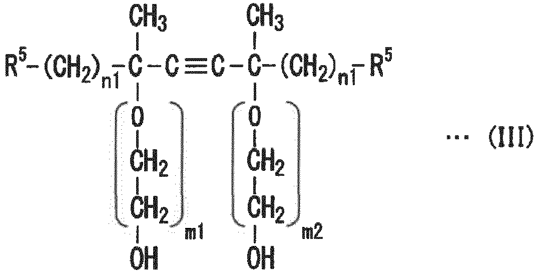

In the formula (III), R⁵ is a C₂₋₄ alkyl group, and n₁ is 1 or 2. m₁ and m₂ each independently represent the average repeating number of oxyethylene groups, and the sum of m₁ and m₂ is from 1 to 6. The sum of m₁ and m₂ is preferably from 1 to 5, more preferably from 1 to 4.

R⁵ may be either linear or branched, and is an alkyl group having preferably 3 to 4 carbon atoms, more preferably 3 carbon atoms. In particular, -CH(CH₃)₂ is preferred.

Especially, the compound of the formula (Illa) (hereinafter, referred to also as the compound (Illa)) is preferred because the PTFE aqueous dispersion is excellent in low foaming property.

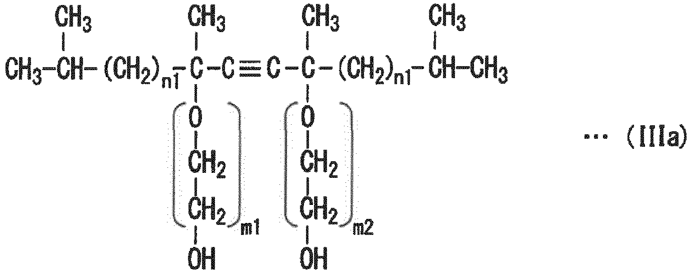

In the formula (Illa), n₁, m₁, m₂, and the total of m₁ and m₂, are the same as n₁, m₁, m₂, and the total of m₁ and m₂ in the formula (III), respectively.

As the compound (III) or the compound (Illa), one type may be used alone, or two or more types may be used in combination. In the case of the combination, the total of m₁ and m₂ indicates the average value and therefore may not be an integer.

As specific preferred examples of the formula (Illa), a compound wherein m=2, and m₁+m₂=3, a compound wherein m=2, and m₁+m₂=4, a compound wherein m=2, and m₁+m₂=5, a compound wherein m=1, and m₁+m₂=1, a compound wherein m=1, and m₁+m₂=1.3, a compound wherein m=1, and m₁+m₂=2, a compound wherein n₁=1, and m₁+m₂=3, a compound wherein m=1, and m₁+m₂=3.5, a compound wherein n₁=1, and m₁+m₂=4, etc. may be mentioned. Among them, a compound (Illa) wherein m=2, and m₁+m₂=4, is preferred from such a viewpoint that the PTFE aqueous dispersion will thereby have a long stability retention time by the mechanical stability test.

As the compound (III) and the compound (IIIa) in the present invention, it is possible to use commercially available products. Commercially available products may, for example, be Dynol 604 (tradename, manufactured by Air Products and Chemicals, Inc.), Surfynol 440 (tradename, manufactured by Air Products and Chemicals, Inc.), Surfynol 420 (tradename, manufactured by Air Products and Chemicals, Inc.), etc.

The content of the compound (III) in the PTFE aqueous dispersion is preferably from 0.01 to 3.0 parts by mass, more preferably from 0.05 to 2.0 parts by mass, further preferably from 0.05 to 1.5 parts by mass, particularly preferably from 0.08 to 1.0 part by mass, most preferably from 0.08 to 0.6 part by mass, per 100 parts by mass of the PTFE particles.

When the content of the compound (III) is at least 0.01 part by mass, the effect to improve the low foaming characteristic tends to be excellent, and when it is at most 3.0 parts by mass, the undissolved residue of the compound (III) is suppressed. If the compound (III) has a large amount of undissolved residue, the uniformity of the coating layer is likely to be impaired when, for example, the PTFE aqueous dispersion is coated.

### <Other surfactants>

The PTFE aqueous dispersion may contain other surfactants which do not belong to any of the above described fluorinated emulsifier, nonionic surfactant (I), polyether polysiloxane copolymer and compound (III), within a range not to impair the effects of the present invention.

For example, the content of other surfactants is preferably at most 3 parts by mass, more preferably at most 2 parts by mass, further preferably at most 1 part by mass, per 100 parts by mass of the PTFE particles. The PTFE aqueous dispersion may not contain other surfactants.

### <Water and other components>

The PTFE aqueous dispersion of the present invention contains water as part or all of the dispersion medium.

Further, it may contain other components which do not belong to any of the above-described PTFE particles, fluorinated emulsifier, nonionic surfactant (I), polyether polysiloxane copolymer, silica, compound (III), other surfactants and water, within a range not to impair the effects of the present invention.

Other components may, for example, be cyclodimethyl siloxane, components used in the emulsion polymerization step for PTFE particles, etc. Further, it may contain known additives such as a polyethylene oxide or a polyurethane type viscosity modifier, a leveling agent, a preservative, a coloring agent, a filler, an organic solvent, aqueous ammonia, etc.

As the polyethylene oxide, the mass-average molecular weight is preferably from 100,000 to 1,500,000, more preferably from 200,000 to 1,000,000.

As the polyurethane type viscosity modifier, SN Thickener 621N (tradename, manufactured by San Nopco Limited), Adeka Nol UH140S (tradename, manufactured by Asahi Denka Corporation), etc. may be mentioned, and Adeka Nol UH140S (tradename, manufactured by Asahi Denka Corporation) is preferred.

As the organic solvent, a water-soluble organic solvent is preferred.

The total amount of other components is preferably at most 5 parts by mass, more preferably at most 4 parts by mass, further preferably at most 3 parts by mass, per 100 parts by mass of the PTFE particles.

### <Viscosity>

The viscosity of the PTFE aqueous dispersion at 23°C is preferably from 3 to 300 mPa·s, more preferably from 3 to 100 mPa·s, further preferably from 5 to 50 mPa·s. When the viscosity is at least the lower limit value in the above range, the coating layer will not be too thin when coated, and when it is at most the upper limit value, it is easy to adjust the thickness of the coating layer when coated.

### <Production method>

The PTFE aqueous dispersion of the present invention can be produced by obtaining a PTFE aqueous emulsion by a process of emulsion polymerization using the above fluorinated emulsifier in an aqueous medium, adding the nonionic surfactant (I) to the PTFE aqueous emulsion for stabilization, and, after concentrating it or without concentrating it, blending the polyether polysiloxane copolymer and optional components as required.

The polyether polysiloxane copolymer is preferably added in the form of an emulsion containing it.

### [Production of PTFE aqueous emulsion]

The PTFE aqueous emulsion can be produced by a method of subjecting TFE to a polymerization reaction or subjecting TFE and at least one type of comonomer, in the presence of an aqueous medium, a polymerization initiator, the above fluorinated emulsifier and a stabilizing aid.

In the case of using a comonomer, it is preferred that its total amount is charged into the polymerization reactor before initiation of the polymerization reaction, from such a viewpoint that the particle size of the resulting PTFE thereby tends to become uniform.

With respect to the polymerization conditions, the polymerization temperature is preferably from 10 to 95°C, and the polymerization pressure is preferably from 0.5 to 4.0 MPa. The polymerization time is preferably from 1 to 20 hours.

The amount of the fluorinated emulsifier to be used in the polymerization step is preferably from 1,500 to 20,000 ppm, more preferably from 2,000 to 20,000 ppm, further preferably from 2,000 to 15,000 ppm, to the final yield of the PTFE particles.

The stabilizing aid is preferably paraffin wax, fluorinated oil, a fluorinated solvent, silicone oil, etc. As the stabilizing aid, one type may be used alone, or two or more types may be used in combination. As the stabilizing aid, paraffin wax is more preferred.

The amount of the stabilizing aid to be used, is preferably from 0.1 to 12 mass%, more preferably from 0.1 to 8 mass%, to the aqueous medium to be used.

As the polymerization initiator, a water-soluble radical initiator or a water-soluble redox catalyst is, for example, preferred. As the water-soluble radical initiator, a persulfate such as ammonium or potassium persulfate, or a water-soluble organic peroxide such as disuccinic acid peroxide, bisglutaric acid peroxide or tert-butyl hydroperoxide, is preferred.

As the polymerization initiator, one type may be used alone, or two or more types may be used in combination. As the initiator, a mixed system of disuccinic acid peroxide and a persulfate is more preferred.

The amount of the polymerization initiator to be used is preferably from 0.01 to 0.20 mass%, more preferably from 0.01 to 0.15 mass%, to the final yield of the PTFE particles.

In the polymerization process, it is possible to control the molecular weight of PTFE to be produced by letting a chain transfer agent be present in the polymerization system.

The chain transfer agent is preferably at least one selected from the group consisting of methanol, ethanol, methane, ethane, propane, hydrogen and a halogenated hydrocarbon, and methanol is more preferably contained.

In the case of using a chain transfer agent, it is preferred to add the chain transfer agent to the polymerization system during the period after the initiation of the polymerization reaction until completion of the addition of the total amount of TFE to be used in the polymerization. The addition of the chain transfer agent may be either batch addition, continuous addition or intermittent addition.

In particular, the chain transfer agent is more preferably added at the time when the amount of TFE added reached from 10 to 95% by mass of the total amount of TFE to be used.

The total amount of the chain transfer agent to be used, is preferably from 0.002 to 0.3 mass%, more preferably from 0.005 to 0.3 mass%, particularly preferably from 0.006 to 0.25 mass%, to the final yield of the PTFE particles.

As the aqueous medium, water or a mixed liquid of a water-soluble organic solvent and water, is used. The water may be ion exchanged water, pure water, ultrapure water.

The water-soluble organic solvent may be an alcohol (except methanol and ethanol), a ketone, an ether, an ethylene glycol, a propylene glycol. In the polymerization of TFE, as the aqueous medium, water is preferred.

The content of the PTFE particles in the PTFE aqueous emulsion is preferably from 15 to 40 mass%, more preferably from 17 to 35 mass%, particularly preferably from 20 to 30 mass%.

### [Concentration of PTFE aqueous emulsion, PTFE dispersion]

To the PTFE aqueous emulsion thus obtained, a nonionic surfactant (I), a polyether polysiloxane copolymer and optional components as required are blended to obtain a low concentration PTFE aqueous dispersion.

Similarly, by adding a nonionic surfactant (I) to the aqueous PTFE emulsion, followed by concentration by a known method, to obtain a concentrate, and then adding a polyether polysiloxane copolymer and optional components as required to the concentrate, it is possible to obtain a high concentration PTFE aqueous dispersion. The content of the PTFE particles in the high concentration PTFE aqueous dispersion, is preferably from 40 to 70 mass%, more preferably from 50 to 70 mass%.

As the concentration method, it is possible to use a known method such as a centrifugal sedimentation method, an electrophoresis method or a phase separation method, as disclosed, for example, on page 32 of Fluororesin Handbook (edited by Satokawa Takaomi, published by Nikkan Kogyo Shimbun, Ltd.).

In the concentration step, certain amounts of the fluorinated emulsifier and the nonionic surfactant (I) will be removed together with the supernatant.

Further, prior to the concentration step, the fluorinated emulsifier may be reduced by a known method. For example, it is possible to use a method of letting it be adsorbed on an anion exchange resin.

The nonionic surfactant (I) is preferably additionally added, after the step of concentrating the PTFE aqueous dispersion, to adjust it to a predetermined content.

### <Applications>

The PTFE aqueous dispersion of the present invention is useful for e.g. the following applications.

Coating process of various fluororesins, preparation of fluororesin films, fluororesin fibers.

In the coating process, the PTFE aqueous dispersion composition is applied to an object to be coated, to obtain a coated article having a PTFE coating layer on the surface. The object to be coated (referred to also as the substrate) is not particularly limited, and, for example, various metals, enamel, glass, various ceramics, or various heat-resistant resin molded articles, may be mentioned.

The above coating is usually carried out by applying the PTFE aqueous dispersion composition of the present invention to a substrate, followed by drying and then sintering. The PTFE aqueous dispersion composition may be applied directly on the substrate, or by providing a primer layer in order to improve the adhesion to the substrate, it may be formed as a top coat layer thereon.

Usually, it is used as a resin molded product in contact directly with an object to be coated, or as a resin molded product in contact with an object to be coated via e.g. a primer layer.

The resin molded product may, for example, be a metal cookware, a bearing, a valve, an electric wire, a metal foil, a boiler, a pipe, a ship hull, an oven lining, an iron base plate, an ice making tray, a snow shovel, a plow, a chute, a conveyor, a roll, a die, a dice, a saw, a rasp, a tool such as a drill, a knife, scissors, a hopper, other industrial containers (especially for the semiconductor industry), a mold, etc.

Depending on the type of the substrate, after the sintering, it is also possible to obtain a PTFE film by peeling it from the substrate. Such a PTFE film is useful as a coating material for a high-frequency printed circuit board, a transfer belt, a packing, etc.

In a case where a porous substrate such as a fibrous substrate, a woven fabric, a nonwoven fabric, is used as the substrate, it is possible to obtain a product having PTFE impregnated into the substrate.

The fibrous substrate may, for example, be glass fibers, carbon fibers, or aramid fibers (Kevlar fibers, etc.). The woven or nonwoven fabric may, for example, be a roofing material (tent film) for a film structure building. In a case where optical transparency is required for such a roofing material, it is preferred to use a modified PTFE as PTFE.

### EXAMPLES

Hereinafter, the present invention will be described in more detail with reference to Examples, but the present invention is not limited to these Examples.

The following measuring methods and evaluation methods were used.

### <Average primary particle size of PTFE>

Measured by using a laser scattering method particle size distribution analyzer (LA-920 (product name), Horiba, Ltd.)

### <Standard specific gravity (SSG) of PTFE>

Measured in accordance with ASTM D1457-91a, D4895-91a.

### <Content of PTFE Particles>

The content of the PTFE particles in the PTFE aqueous emulsion, concentrate or PTFE aqueous dispersion can be determined by the following method.

10 g of the liquid to be measured was placed as a sample in an aluminum dish with a known mass and heated at 380°C for 35 minutes to remove a surfactant, etc. by thermal decomposition. The mass after heating is defined as the mass of the PTFE particles in 10 g of a sample.

### <Content of fluorinated emulsifier>

The content of the fluorinated emulsifier in the PTFE aqueous emulsion, concentrate or PTFE aqueous dispersion can be determined by the following method.

By using LCMS (high performance liquid chromatography with a mass spectrometer), a calibration curve is obtained in advance from the peak area obtained by a fluorinated emulsifier with a known concentration. Next, after a predetermined amount of a liquid to be measured is used as a sample and dried at 70°C for 16 hours, the fluorinated emulsifier is extracted with ethanol, the peak area by LCMS is measured, and the content of the fluorinated emulsifier in the sample is determined by using the calibration curve.

### <Content of nonionic surfactant (I)>

The content of the nonionic surfactant (I) in the PTFE aqueous emulsion, concentrate or PTFE aqueous dispersion can be determined by the following method.

10 g of a liquid to be measured is placed in an aluminum dish with a known mass as a sample, the mass after drying at 120°C for 1 hour is measured, and the content of the PTFE particles measured beforehand is subtracted to determine the content of the nonionic surfactant (I).

### <Content of polyether polysiloxane copolymer>

The content of the polyether polysiloxane copolymer in the PTFE aqueous dispersion can be determined by the following method.

1 g of a liquid to be measured and 4 g of methanol are mixed and stirred, followed by centrifugation (5,000 rpm, 10 minutes). The resulting supernatant is dried and dissolved in 1 mL of deuterated chloroform and measured by NMR.

### <Viscosity>

The viscosity of the PTFE aqueous dispersion was measured by a Brookfield viscometer, using No.1 spindle, at a rotational speed of 60 rpm at 23°C.

### <Mechanical stability test>

100 g of the PTFE aqueous dispersion is put in a plastic cup having a diameter 65 mm and an inner volume of 400 ml, and immersed in a water bath at 60°C, wherein a stirring blade (Fig. 1) with a diameter of 55 mm is set so that the height from the bottom of the plastic cup to the center of the stirring blade (the position at 7 mm from the lower end of the stirring blade in the axial direction in Fig. 1(b)) becomes to be 20 mm, and rotated at 3,000 rpm, whereby the time until the PTFE aqueous dispersion is aggregated, or solidified and scattered, is measured as the stability retention time.

The mechanical stability is evaluated according to the following criteria.
A: The stability retention time is at least 30 minutes.
B: The stability retention time is at least 20 minutes and less than 30 minutes.
C: The stability retention time is less than 20 minutes.

### <Low foaming property test by Ross Miles method>

A low foaming property test is performed according to a Ross Miles method in accordance with JIS K3362. Specifically, 50 mL of the PTFE aqueous dispersion is placed in a cylinder having an inner diameter of 50 mm, and to this dispersion, 200 mL of the PTFE aqueous dispersion is allowed to flow down from an opening having an inner diameter of 2.9 mm from the height of 90 cm. The flowing liquid collides with the liquid in the cylinder so that bubbles can form. The height (unit: cm) of a foam immediately after finishing flowing 200 mL of the PTFE aqueous dispersion is measured. As this value is smaller, it becomes less likely to foam.

The low foaming property is evaluated according to the following criteria.
A: The height of the foam is at most 6 cm.
B: The height of the foam is more than 6 cm and less than 10 cm.
C: The height of the foam exceeds 10 cm.

### <Coating property test (coating property)>

A rectangular aluminum plate with a length of 100 mm, a width of 75 mm and a thickness of 0.5 mm is prepared and a vinyl tape having a width of 18 mm and a thickness of 0.2 mm is laminated in an L shape along one long side and one short side of the four sides. Approximately 1 ml of the PTFE aqueous dispersion is dropped on the aluminum plate in the vicinity where the vinyl tape crosses (in the vicinity of the interior angle of the L shape) using a dropper, and is immediately coated on the aluminum plate by a blade coating method using a stainless steel bar having an outer diameter of 12 mm and a length of 300 mm. The stainless steel bar is moved parallel to the long side in a state where one end side is in contact with the vinyl tape along the long side and the other end side is in contact with the long side of the aluminum plate. Therefore, the gap between the stainless steel bar and the aluminum plate gradually decreases from one end side (maximum 0.2 mm) of the stainless steel bar to the other end side (minimum 0 mm).

The aluminum plate coated with the PTFE aqueous dispersion is placed in an oven at 120°C for 2 minutes to dry the moisture, allowed to cool for 5 minutes at room temperature, and then the vinyl tape is peeled off. Next, it is placed in an oven at 380°C for 10 minutes and fired. After cooling to ambient temperature, the coating film on the aluminum plate is visually observed. When the PTFE aqueous dispersion is repelled on the aluminum plate, a circular hollow is formed in the coating film. The part where the aluminum plate is exposed in the hollow is defined as a "repelled part" and the diameter of the exposed aluminum plate is measured to be the diameter of the "repelled part". It is evaluated according to the following criteria.
A: The number of the repelled part is 1 or zero.
B: The number of the repelled part is at least 2, and the number of the repelled part which has the diameter of at least 5 mm is 1 or zero.
C: The number of the repelled part is at least 2, and the number of the repelled part which has the diameter of at least 5 mm is at least 2.

In the following description and table, the following names represent the following components. The contents shown in the table are the contents of active ingredients.
Comonomer (1): (perfluorobutyl)ethylene
Fluorinated emulsifier (1): EEA
Chain transfer agent (1): methanol
Nonionic surfactant (1) of formula (I): Tergitol TMN100X (product name, manufactured by Dow Chemical Co.). It is a nonionic surfactant of the above formula (I), wherein R¹ is a 1-(2-methylpropyl)-3,5-dimethylhexyl group and A is a polyoxyethylene chain having an average repeating number of 10.1 oxyethylene groups.

Polyether polysiloxane copolymer (1): A block copolymer of the above formula (Ila), wherein R' is a methyl group, R²¹ and R²² are each an allyl group, a is 2.5, b is 4, c is 4, n is 4, and e is 2. The polysiloxane chain is 35 mass% to the total of the polysiloxane chain and the polyether chain, and the oxyethylene group is 50 mol% to the total of the oxyethylene group and the oxypropylene group constituting the polyether chain.

Compound (1) of formula (Illa): Dynol 604 (product name, manufactured by Air Products). It is a compound of the formula (Illa), wherein n₁ is 2, and m₁+m₂ is 4.

Low foaming agent (1): Antifoam E-20 (product name, manufactured by Kao Corporation), which contains dimethylpolysiloxane and polyoxyethylene alkyl ether.

Low foaming agent (2): BYK-016 (product name, manufactured by BYK Chemie Japan), which contains silica-based hydrophobic particles and silicon dioxide.

Low foaming agent (3): BYK-1640 (product name, manufactured by BYK Chemie Japan), which contains a surfactant polymer and silica-based hydrophobic particles.

### (Production Example 1: Production of PTFE aqueous emulsion)

Into a 100 L stainless steel autoclave equipped with a baffle and a stirrer, 75 g of the fluorinated emulsifier (1), 924 g of paraffin wax and 59 L of deionized water were charged. After the autoclave was purged with nitrogen and brought to a reduced pressure, 3.5 g of the comonomer (1) was charged. Further, while pressurizing with TFE and stirring, the temperature was raised to 79°C. Then, the pressure was raised to 1.42 MPa with TFE, and 0.2 g of ammonium persulfate and 26.3 g of disuccinic acid peroxide (concentration 80 mass%, remainder being water) were dissolved in 1 L of hot water of about 70°C and injected to initiate a polymerization reaction. The internal pressure dropped to 1.40 MPa in about 6 minutes. While adding TFE so that the internal pressure of the autoclave was maintained to be 1.42 MPa, the polymerization was continued. At the time when the amount of TFE added after initiation of the polymerization became 3.91 kg, 158 g of the fluorinated emulsifier (1) was added. Further, at the time when the amount of TFE added after initiation of the polymerization became 20.80 kg, 13.9 g of the chain transfer agent (1) was added. Then, at the time when the amount of TFE added after initiation of the polymerization became 23.11 kg, the reaction was terminated. During this period, the polymerization temperature was raised to 85°C. The polymerization time was 140 minutes.

The obtained PTFE aqueous emulsion was cooled, and the supernatant paraffin wax was removed, whereupon the PTFE aqueous emulsion was taken out. A coagulum remaining in the reactor was just about a trace. The content of the PTFE particles in the obtained PTFE aqueous emulsion was 26.5 mass%.

In this Example, based on the mass of the PTFE particles, the proportion of the total amount (233 g) of the fluorinated emulsifier (I) used, is 10,000 ppm.

The average primary particle size of PTFE fine particles in the obtained PTFE aqueous emulsion was 0.21 µm, and SSG of PTFE was 2.179.

Further, the content of the unit based on the comonomer (1) to the total monomer units in the obtained PTFE particles was 0.015 mass%.

In the following examples, the PTFE aqueous emulsion obtained in Production Example 1 was used to prepare PTFE aqueous dispersions with the formulations as given in Table 1.

### (Example 1)

To the aqueous PTFE emulsion obtained in Production Example 1, the nonionic surfactant of the formula (I) (hereinafter referred to also as the nonionic surfactant (1)) was dissolved so that the active component would be 3.0 parts by mass to 100 parts by mass of the PTFE particles, to obtain a stable aqueous dispersion.

Then, into a 5 L beaker, 5 kg of the aqueous dispersion and 200 g of a strongly basic anion ion exchange resin (manufactured by Purolite, PUROLITE (registered trademark) A300) were put and stirred at room temperature for 12 hours.

Further, the aqueous dispersion was filtered by a nylon mesh with a mesh size of 100 and then concentrated by electrophoresis, whereupon the supernatant was removed, to obtain a concentrate wherein the content of the PTFE particles was 65 mass%, and the content of the nonionic surfactant (1) was 2.0 parts by mass per 100 parts by mass of the PTFE particles.

To this concentrate, the nonionic surfactant (1) and the polyether polysiloxane copolymer (1) were added, and water and ammonia in an amount to become a concentration of 500 ppm were added, thereby obtaining the desired PTFE aqueous dispersion.

The content (unit: mass%) of the PTFE particles in the obtained PTFE aqueous dispersion, and the content (unit: parts by mass) of each component per 100 parts by mass of the PTFE particles are shown in Table 1.

The specific gravity and viscosity of the PTFE aqueous dispersion were measured by the above methods. Further, the mechanical stability test, low foaming property test and coating property test were carried out by the above methods. These results are shown in Table 1.

### (Examples 2 to 5)

In Example 1, the compounds to be added to the concentrate were changed as shown in Table 1. In Example 2, when the nonionic surfactant (1) and the polyether polysiloxane copolymer (1) were added to the concentrate, the compound (1) of the formula (IIIa) was also added to the concentrate.

In other respects, a PTFE aqueous dispersion was obtained and evaluated in the same manner as in Example 1.

### (Comparative Example 1)

In Example 1, the polyether polysiloxane copolymer (1) was not added to the concentrate. In other respects, a PTFE aqueous dispersion was obtained in the same manner as in Example 1.

### (Comparative Example 2)

In Example 1, the addition amount of the nonionic surfactant (1) was changed. Also, the polyether polysiloxane copolymer (1) was not added to the concentrate. In other respects, a PTFE aqueous dispersion was obtained in the same manner as in Example 1.

### (Comparative Examples 3 to 6)

In Example 1, the addition amount of the nonionic surfactant (1) was changed. In addition, the polyether polysiloxane copolymer (1) was not added to the concentrate, but instead the low foaming agent shown in Table 1 was added. In other respects, a PTFE aqueous dispersion was obtained in the same manner as in Example 1.

### (Comparative Examples 7 to 8)

In Example 1, the addition amount of the polyether polysiloxane copolymer (1) was changed. In other respects, a PTFE aqueous dispersion was obtained in the same manner as in Example 1.

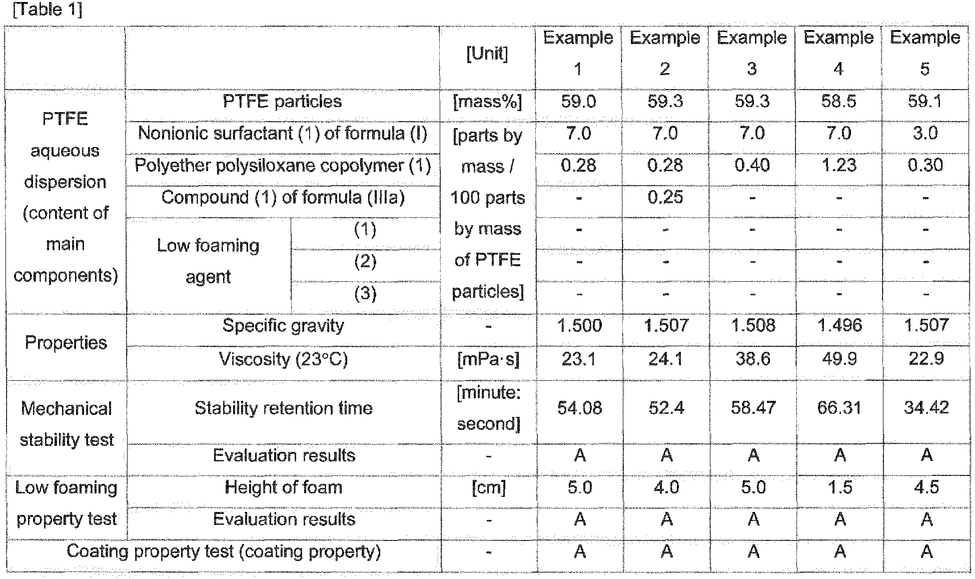

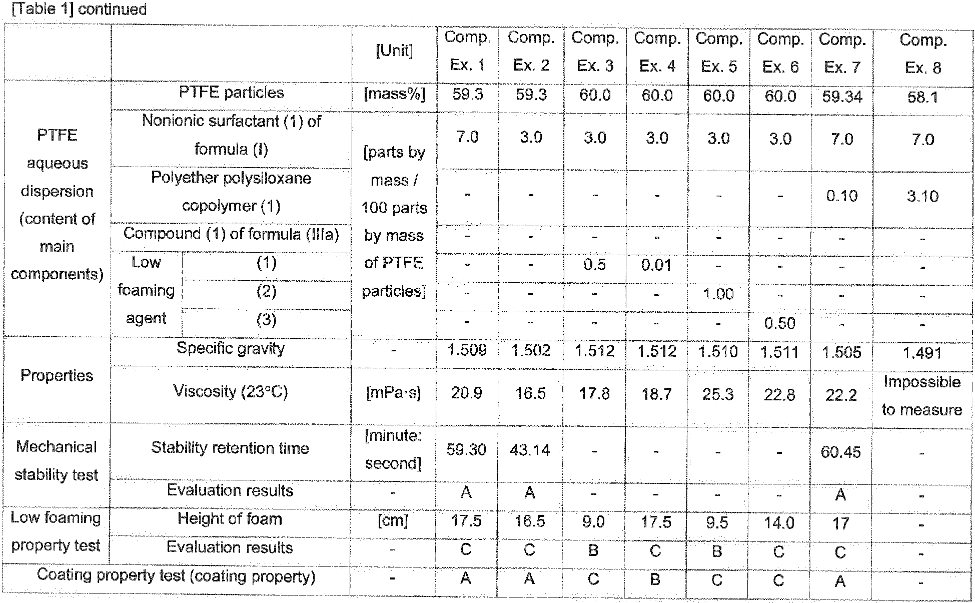

As shown in the results of Table 1, the PTFE aqueous dispersions of Examples 1 and 3 to 5 in which the nonionic surfactant of the formula (I) and the polyether polysiloxane copolymer were used in combination, and the PTFE aqueous dispersion of Example 2 in which the compound of the formula (illa) was further added, are excellent in the mechanical stability, are excellent in the low foaming property, are less likely to foam, and are excellent in the coating property.

Comparative Examples 1 and 2 are comparative examples in which the compound to be added to the concentrate is only the nonionic surfactant of the formula (I). The physical properties and mechanical stability are good, but the low foaming property is insufficient.

In Comparative Examples 3 to 6, the nonionic surfactant of formula (I) and various low foaming agents were used in combination, but the effect of improving the low foaming property is hardly observed as in Comparative Example 2. Also, the coating property is insufficient.

In Comparative Examples 7 and 8, the nonionic surfactant (1) and the polyether polysiloxane copolymer were used in combination, but the addition amount of the polyether polysiloxane copolymer was too small or too large, and the low foaming property is insufficient.

## Claims

1. A polytetrafluoroethylene aqueous dispersion **characterized by** comprising
from 15 to 70 mass% of polytetrafluoroethylene particles having an average primary particle size of from 0.1 to 0.5 µm as measured by using a laser scattering method particle size distribution analyzer,
from 0.1 to 20,000 ppm, to the mass of the above polytetrafluoroethylene particles, of at least one fluorinated emulsifier selected from the group consisting of a C₄₋₇ fluorinated carboxylic acid which may have an etheric oxygen atom, and salts thereof,
from 1 to 20 parts by mass, per 100 parts by mass of the above polytetrafluoroethylene particles, of a nonionic surfactant represented by the following formula (I),
from 0.15 to 3 parts by mass, per 100 parts by mass of the above polytetrafluoroethylene particles, of a polyether polysiloxane copolymer, and
water,
R'-O-A-H (I)
wherein R¹ is a C₈₋₁₈ alkyl group, and A is a polyoxyalkylene chain composed of an average repeating number of from 5 to 20 oxyethylene groups and an average repeating number of from 0 to 2 oxypropylene groups,
wherein the polyether polysiloxane copolymer is a block copolymer in which a linear polysiloxane chain and a linear polyether chain are alternately bonded, and
in which the terminal silicon atom of the linear polysiloxane chain and the terminal oxygen atom of the linear polyether chain are bonded.

2. The aqueous dispersion according to Claim 1, wherein the polytetrafluoroethylene particles are particles of non-melt-moldable modified PTFE.

3. The aqueous dispersion according to Claim 1 or 2, wherein the standard specific gravity of the polytetrafluoroethylene particles is at least 2.14 and less than 2.22
as measured in accordance with ASTM D1457-91a, D4895-91a.

4. The aqueous dispersion according to any one of Claims 1 to 3, wherein the fluorinated emulsifier is an ammonium salt of the fluorinated carboxylic acid having an etheric oxygen atom.

5. The aqueous dispersion according to any one of Claims 1 to 4, wherein A in the nonionic surfactant represented by the formula (I) is a polyoxyalkylene chain composed of an average repeating number of from 7 to 12 oxyethylene groups and an average repeating number of from 0.5 to 1.5 oxypropylene groups.

6. The aqueous dispersion according to any one of Claims 1 to 5, wherein the polyether chain of the polyether polysiloxane copolymer is composed of the oxyethylene group and the oxypropylene group.

7. The aqueous dispersion according to any one of Claims 1 to 6, wherein in the polyether polysiloxane copolymer, the proportion of the polysiloxane chain to the total of the polyether chain and the polysiloxane chain is from 30 to 65 mass%.

8. The aqueous dispersion according to any one of Claims 1 to 7, wherein in the polyether polysiloxane copolymer, the proportion of the oxyethylene group to the total of the oxyalkylene group constituting the polyether chain is from 33 to 66 mol%.

## Patentansprüche

1. Wässrige Polytetrafluorethylendispersion, **gekennzeichnet durch** Umfassen von
von 15 bis 70 Massen-% von Polytetrafluorethylenteilchen mit einer durchschnittlichen Primärteilchengröße von 0,1 bis 0,5 µm, gemessen unter Verwendung eines Laserstreuverfahrens eines Teilchengrößenverteilungsmessgeräts,
von 0,1 bis 20.000 ppm, bezogen auf die Masse der vorstehenden Polytetrafluorethylenteilchen mindestens eines fluorierten Emulgators, ausgewählt aus der Gruppe, bestehend aus einer fluorierten C₄₋₇ Carbonsäure, welche ein etherisches Sauerstoffatom aufweisen kann, und Salzen davon,
von 1 bis 20 Massenanteilen pro 100 Massenanteilen der vorstehenden Polytetrafluorethylenteilchen eines nichtionischen grenzflächenaktiven Mittels, dargestellt durch die folgende Formel (I),
von 0,15 bis 3 Massenanteilen pro 100 Massenanteilen der obigen Polytetrafluorethylenteilchen eines Polyether-Polysiloxan-Copolymers und
Wasser,
R¹-O-A-H (I)
wobei R¹ eine C₈₋₁₈ Alkylgruppe ist und A eine Polyoxyalkylenkette ist, die aus einer durchschnittlichen Wiederholungszahl von 5 bis 20 Oxyethylengruppen und einer durchschnittlichen Wiederholungszahl von 0 bis 2 Oxypropylengruppen zusammengesetzt ist,
wobei das Polyether-Polysiloxan-Copolymer ein Block-Copolymer ist, in welchem eine lineare Polysiloxankette und eine lineare Polyetherkette abwechselnd verbunden sind und in welchem das endständige Siliziumatom der linearen Polysiloxankette und das endständige Sauerstoffatom der linearen Polyetherkette verbunden sind.

2. Wässrige Dispersion nach Anspruch 1, wobei die Polytetrafluorethylenteilchen Teilchen von nicht-schmelzformbaren modifiziertem PTFE sind.

3. Wässrige Dispersion nach Anspruch 1 oder 2, wobei die relative Standarddichte der Polytetrafluorethylenteilchen, gemessen gemäß ASTM D1457-91a, D4895-91a, mindestens 2,14 und weniger als 2,22 beträgt.

4. Wässrige Dispersion nach einem der Ansprüche 1 bis 3, wobei der fluorierte Emulgator ein Ammoniumsalz der fluorierten Carbonsäure mit einem etherischen Sauerstoffatom ist.

5. Wässrige Dispersion nach einem der Ansprüche 1 bis 4, wobei A in dem nichtionischen grenzflächenaktiven Mittel, dargestellt durch die Formel (I), eine Polyoxyalkylenkette ist, die aus einer durchschnittlichen Wiederholungszahl von 7 bis 12 Oxyethylengruppen und einer durchschnittlichen Wiederholungszahl von 0,5 bis 1,5 Oxypropylengruppen zusammengesetzt ist.

6. Wässrige Dispersion nach einem der Ansprüche 1 bis 5, wobei die Polyetherkette des Polyether-Polysiloxan-Copolymers aus der Oxyethylengruppe und der Oxypropylengruppe zusammengesetzt ist.

7. Wässrige Dispersion nach einem der Ansprüche 1 bis 6, wobei in dem Polyether-Polysiloxan-Copolymer der Anteil der Polysiloxankette zur Gesamtmenge der Polyetherkette und der Polysiloxankette von 30 bis 65 Massen-% beträgt.

8. Wässrige Dispersion nach einem der Ansprüche 1 bis 7, wobei in dem Polyether-Polysiloxan-Copolymer der Anteil der Oxyethylengruppe zur Gesamtmenge der Oxyalkylengruppe, die die Polyetherkette ausmacht, von 33 bis 66 mol% beträgt.

## Revendications

1. Dispersion aqueuse de polytétrafluoroéthylène, **caractérisée par** le fait de comprendre
de 15 à 70 % en masse de particules de polytétrafluoroéthylène ayant une taille particulaire primaire moyenne allant de 0,1 à 0,5 µm telle que mesurée en utilisant un analyseur de distribution de taille particulaire à procédé de diffusion laser,
de 0,1 à 20 000 ppm, par rapport à la masse des particules de polytétrafluoroéthylène ci-dessus, d'au moins un émulsifiant fluoré sélectionné parmi le groupe constitué d'un acide carboxylique fluoré en C₄₋₇ qui peut avoir un atome d'oxygène éthérique, et des sels de celui-ci,
de 1 à 20 parties en masse, pour 100 parties en masse des particules de polytétrafluoroéthylène ci-dessus, d'un tensioactif non ionique représenté par la formule suivante (1),
de 0,15 à 3 parties en masse, pour 100 parties en masse des particules de polytétrafluoroéthylène ci-dessus, d'un copolymère de polyéther polysiloxane, et de l'eau,
R'-O-A-H (I)
dans laquelle R¹ est un groupe alkyle en C₈₋₁₈, et A est une chaîne de polyoxyalkylène composée d'un nombre de répétitions moyen allant de 5 à 20 groupes oxyéthylène et d'un nombre de répétitions moyen allant de 0 à 2 groupes oxypropylène,
dans laquelle le copolymère de polyéther polysiloxane est un copolymère à blocs dans lequel une chaîne de polysiloxane linéaire et une chaîne de polyéther linéaire sont liées en alternance, et
dans lequel l'atome de silicium terminal de la chaîne de polysiloxane linéaire et l'atome d'oxygène terminal de la chaîne de polyéther linéaire sont liés.

2. Dispersion aqueuse selon la revendication 1, dans laquelle les particules de polytétrafluoroéthylène sont des particules de PTFE modifié non moulable à l'état fondu.

3. Dispersion aqueuse selon la revendication 1 ou 2, dans laquelle la gravité spécifique standard des particules de polytétrafluoroéthylène est d'au moins 2,14 et de moins de 2,22 telle que mesurée conformément à ASTM D1457-91a, D4895-91a.

4. Dispersion aqueuse selon l'une quelconque des revendications 1 à 3, dans laquelle l'émulsifiant fluoré est un sel d'ammonium de l'acide carboxylique fluoré ayant un atome d'oxygène éthérique.

5. Dispersion aqueuse selon l'une quelconque des revendications 1 à 4, dans laquelle A dans le tensioactif non ionique représenté par la formule (I) est une chaîne de polyoxyalkylène composée d'un nombre de répétitions moyen allant de 7 à 12 groupes oxyéthylène et d'un nombre de répétitions moyen allant de 0,5 à 1,5 groupes oxypropylène.

6. Dispersion aqueuse selon l'une quelconque des revendications 1 à 5, dans laquelle la chaîne de polyéther du copolymère de polyéther polysiloxane est composée du groupe oxyéthylène et du groupe oxypropylène.

7. Dispersion aqueuse selon l'une quelconque des revendications 1 à 6, dans laquelle dans le copolymère de polyéther polysiloxane, la proportion de la chaîne de polysiloxane par rapport au total de la chaîne de polyéther et de la chaîne de polysiloxane va de 30 à 65 % en masse.

8. Dispersion aqueuse selon l'une quelconque des revendications 1 à 7, dans laquelle dans le copolymère de polyéther polysiloxane, la proportion du groupe oxyéthylène par rapport au total du groupe oxyalkylène constituant la chaîne de polyéther va de 33 à 66 % en mole.
